# EUROPÄISCHE PATENTSCHRIFT

(11) **EP 0 654 070 B1**
(45) Veröffentlichungstag und Bekanntmachung des Hinweises auf die Patenterteilung: **15.09.1999**
(21) Anmeldenummer: 93917687.1
(22) Anmeldetag: 29.07.1993
(51) Int. Cl.: C09J 123/02, C09J 123/16, C09J 123/20, C09J 151/06

(54) **THERMOPLASTISCHER SCHMELZKLEBSTOFF**
THERMOPLASTIC HOT-MELT-TYPE ADHESIVE
COLLE A FUSION THERMOPLASTIQUE

(30) Priorität: 06.08.1992 DE 4226081
(43) Veröffentlichungstag der Anmeldung: 24.05.1995
(73) Patentinhaber: Henkel Kommanditgesellschaft auf Aktien, 40191 Düsseldorf (DE)
(72) Erfinder: BUTTERBACH, Rüdiger, D-45145 Essen (DE); KOPANNIA, Siegfried, D-40221 Düsseldorf (DE); ANDRES, Johannes, D-40723 Hilden (DE)
(86) Internationale Anmeldenummer: EP9302019
(87) Internationale Veröffentlichungsnummer: WO9403548

(56) Entgegenhaltungen:
- DE-A- 2 402 259
- DE-A- 2 530 726
- FR-A- 2 346 395
- US-A- 4 022 728
- US-A- 4 761 450

## Beschreibung

Die Erfindung betrifft einen thermoplastischen Schmelzklebstoff auf der Basis eines Polymerblends aus Polyolefinen sowie seine Verwendung.

Schmelzklebstoffe sind bei Raumtemperatur feste Klebstoffe, die als Schmelze auf die zu verbindenden Substrate aufgetragen werden und nach dem Zusamnenfügen beim Abkühlen durch Verfestigung abbinden. Bei thermoplastischen Klebstoffen kann dieser Vorgang beliebig oft wiederholt werden, da sie nicht vernetzen. Sie basieren im wesentlichen auf Polymeren wie Polyamiden, Polyestern oder Polyolefinen. Diese Polymere bestimmen entscheidend die Klebschicht-Eigenschaften bezüglich Haftung, Festigkeit und Temperaturverhalten. Um spezielle Eigenschaften entsprechend den konkreten Verwendungszwecken zu erzielen, werden Zusätze hinzugefügt, z.B. Klebrigmacher zur Erhöhung der Adhäsion, Weichmacher zur Erhöhung der Flexibilität, Wachse zur Verkürzung der offenen Zeit oder Kristallisationsbeschleuniger zur Verbesserung der Morphologie. Die Eigenschaften der Schmelzklebstoffe können aber auch durch Mischen von gleichartigen oder verschiedenartigen Basis-Polymeren gezielt geändert werden. Derartige Polymerblends können bekanntlich unter bestimmten Bedingungen z.B. die Schlag- und Kerb-Zähigkeit erhöhen. Entscheidend dafür ist deren Morphologie. Diese Morphologie setzt sich im allgemeinen aus einer kristallinen hartelastischen Matrixphase und aus einer dispersen weichelastischen Phase zusammen. Bei einer Belastung mit hoher Verformungsgeschwindigkeit wird ein großer Teil der auftretenden Spannungen von der weichelastischen Phase abgebaut.

Es ist allgemein bekannt, folgende Arten an Polyolefinen als Rohstoffbasis für Schmelzklebstoffe einzusetzen: Ethylen/Vinylacetat-Copolymere, Ethylen/Ethylacrylat-Copolymere oder Polyisobuten. Dabei werden unter "Polyolefinen" Polymere der allgemeinen Struktur

(- CH₂ - CR₁R₂ -)n

verstanden, wobei R₁ meistens für H und R₂ für H oder eine geradkettige oder verzweigte gesättigte aliphatische bzw. cycloaliphatische oder aromatische Gruppe steht. Zu den Polyolefinen zählen auch deren Copolymere mit Heteroatom-haltigen Olefinen wie Acrylsäure, Maleinsäure oder Vinylester einschließlich deren Derivate. Wenn R₁ = H ist, spricht man von Poly-α-olefinen.

Derartige Polyolefine werden z.B. von Schleinzer beschrieben (siehe Materiaux et Techniques (1990), S. 47-52). Im Mittelpunkt stehen Terpolymere aus Ethylen, Propylen und But-1-en. Diese können zur Laminierung, zur Montage, im Hygienebereich und bei Verpackungen und Etikettierungen eingesetzt werden. Zur Ausrichtung auf die speziellen Verwendungszwecke werden verschiedene Polymer-Mischungen vorgeschlagen: So sollen zur Verbesserung der Klebrigkeit bis zu 30 Gew.-% an Klebrigmacher zugesetzt werden (siehe Seite 49, linke Spalte, obere Hälfte sowie Seite 50, linke Spalte, Absatz 4). Zur Erhöhung der Erweichungstemperatur, der Schmelzviskosität und der Wärmebeständigkeit soll vor allem isotaktisches Polypropylen zugesetzt werden (siehe Seite 49, Mitte).Um die Mischung aus dem Terpolymeren und Wachs weniger spröde und kompatibler zu machen, soll Polyisobutylen zugesetzt werden (siehe Seite 49, linke Spalte, Mitte). Für Verpackungszwecke werden Schmelzklebstoffe aus dem Terpolymeren, einem Klebrigmacher, einem Polyethylenwachs oder einem Polypropylenwachs sowie evtl. einem zusätzlichen Polyisobutylen beschrieben (siehe Seite 51, rechte Spalte sowie Seite 52). Zur Verbesserung der Haftung auf polaren Substraten wie Metall und Glas kann das amorphe Poly-α-olefin noch durch funktionelle Gruppen modifiziert werden (siehe Seite 48, rechte Spalte, zweiter Absatz).

Die US-A-4 761 450 beschreibt einen Schmelzklebstoff, der neben Hochdruckpolyethylen und einem Copolymer, bestehend aus Butylen, Ethylen oder Propylen, ein niedermolekulares Polybutylen (Mw = 500-5000) und/oder ein amorphes Polypropylen (Mw = 300-20000) enthält.

Die FR-A-2 346 395 berichtet über einen Schmelzklebstoff, der zu 15-90 Gew.-% aus amorphem α-Polyolefin (z.B. ataktischem Polypropylen, Terpolymer, bestehend aus Ethylen, Propylen und Butylen), 0-15 Gew.-% aus kristallinem Polyolefin (isotaktisches Polyethylen, Polypropylen, Polybutylen) sowie zu 5-50 Gew.-% aus einem niedermolekularem Polybutylen /Mw = 500-1000) oder aus Cyclododecatrien besteht.

In der US-A-4 022 728 werden Schmelzklebstoffe vorgestellt, die zu 40-70 Gew.-% aus amorphem Polyolefin, zu 1,0 bis 2,0 Gew.-% aus kristallinem Polypropylen und zu 15 bis 50 Gew.-% aus niedermolekularen Elastomeren (z.B. Polyisobutylen und deren Copolymere) bestehen. Dieser Klebstoff zeigt eine hohe Stabilität verbunden mit guten Klebeeigenschaften besonders bei tiefen Temperaturen.

Ausgehend von diesem Stand der Technik galt es, sowohl die Herstellungs- als auch die Verarbeitungseigenschaften der Schmelzklebstoffe sowie deren Gebrauchseigenschaften zu verbessern. Insbesondere sollte die Zähigkeit, die Wärmestandfestigkeit, das Viskositätsverhalten und die Tieftemperatureigenschaften im Bereich von -30 bis +130°C, vorzugsweise oberhalb von 20 °C verbessert werden.

Die Lösung der Aufgabe ist den Patentansprüchen zu entnehmen. Sie beruht im wesentlichen in der Verwendung eines Oligomeren aus α-Olefinen mit 8 bis 16 C-Atomen im Monomeren und einem Molekulargewicht des Oligomeren bis zu 5 000 (Zahlenmittel) zur Herstellung eines Polymerblends mit einem weitgehend amorphen Poly-α-olefin mit einem Kristallisationsgrad von < 30 % und einem weitgehend kristallinen Polyolefin, vorzugsweise einem Poly-α-olefin, mit einem Kristallisationsgrad von > 55 %, jeweils bestimmt mit DDK gegen einen hochkristalinen Poly-α-olefin-Standard.

Was unter "Poly-α-olefin" zu verstehen ist, wurde bereits weiter oben definiert.

Der Kristallisationsgrad wird bestimmt mit der Dynamischen-Differenz-Karorimetrie (DDK) gegen einen hochkristallinen Poly-α-olefinstandard.

Unter den Poly-α-olefinen mit einem Kristallisationsgrad von < 30 % werden ataktische Poly-α-olefine mit einem Molekulargewicht von mehr als 5 000 aus den Monomeren Ethylen, Propylen und/oder Butylen, insbesondere Terpolymere bevorzugt. Zur Erhöhung der Haftung auf polaren Substraten können auch zweckmäßigerweise Comonomere mit funktionellen Gruppen verwendet werden, z.B. Acrylsäure, Maleinsäure oder Vinylacetat. Die Erweichungstemperaturen der weitgehend amorphen Poly-α-olefine liegen über 50, vorzugsweise über 100°C (Ring + Ball-Methode nach ASTM E 28). Konkrete weitgehend amorphe Poly-α-olefine sind: Vestoplast von der Firma Hüls sowie APAO-Typen der Fa. Hoechst und Eastoflex der Fa. Eastman Chemical Company.

Die Kugeldruckhärte nach DIN 53456 von Poly-α-olefinen mit einem Kristallisationsgrad > 55 % beträgt weniger als 85 N/mm². Ihr Kristallit-schmelzpunkt liegt oberhalb von 125°C, vorzugsweise oberhalb von 160 °C, bestimmt mit der DDK als Schmelzpeakmaximum. Die weitgehend kristallinen Poly-α-olefine sind unter Verwendung von Ziegler-Natta-Katalysatoren als isotaktische Polymere herstellbar. Es kommen folgende Polymerarten in Frage: Polyethylen, Polypropylen, Polybutylen oder Polystyrol. Vorzugsweise wird isotaktisches Polypropylen mit einem Molekulargewicht von mehr als 5 000 eingesetzt. Es wird z.B. unter dem Handelsnamen Vestolen von der Firma Hüls vertrieben.

Als "oligomer" wird ein Poly-α-olefin dann bezeichnet, wenn seine Molmasse unter 5 000, vorzugsweise unter 1 000 g liegt. Bevorzugt wird das Di-, Tri- und/oder Tetramere von α-Olefinen mit 8 bis 16 C-Atomen eingesetzt. Zu ihrer Herstellung wird üblicherweise zunächst Ethylen oligomerisiert, z.B. zum Dec-1-en. Dieses α-Olefin wird oligomerisiert. Daran schließt sich üblicherweise die destillative Aufbereitung und eine katalytische Hydrierung zur Beseitigung von Doppelbindungen an. Man erhält so aliphatische, flüssige Substanzen, die nur aus Kohlenstoff und Wasserstoff bestehen. Bevorzugtes 0ligo-α-olefin ist das 0ligo-dec-1-en mit der Struktur:

H - [CH₂ - CH(C₈H₁₇) -]ₙ H

mit n = 2, 3 und/oder 4. Es kann z.B. von der Firma Henkel Corp. (Emery) bezogen werden.

Das erfindungsgemäße Polymerblend ist bei Raumtemperatur fest und eignet sich als Basis für Dicht- und Klebstoffe, die als Schmelze appliziert werden. Für diesen Zweck wird das Polymerblend optimiert:
- Zur Erhöhung der Klebrigkeit der Schmelze bei der Verarbeitungstemperatur und der Adhäsion werden klebrigmachende Harze zugesetzt. Geeignet sind: Aliphatische Kohlenwasserstoffe, Polyterpene, Terpen-Phenol-Harze sowie hydrierte Kolophoniumharzester. Konkret seien genannt: Dertophene von der Firma Willers und Engel sowie Escorez der Fa. Exxon, Foral und Kristalex der Fa. Herkules, Arkon der Fa. Arakawa, Naros der Fa. Nares.
- Zur Beeinflussung der Viskosität und der offenen Zeit, vor allem zur Verbesserung der Kristallisation werden Wachse als Nukleierungsmittel zugesetzt. Dabei handelt es sich um Polyethylen- sowie Polypropylen-Wachse. Konkret genannt seien: Vestowax der Fa. Hüls, Epolene der Fa. Eastman, PP-Wachs der Fa. Hoechst, Escomer der Fa. Exxon und Techniwax der Fa. Dussek Campbell.
- Zur Verminderung des oxidativen Abbaus während der Verarbeitung werden Stabilisatoren zugesetzt. Dabei handelt es sich um Stoffklassen wie sterisch gehinderte Phenole. Konkret genannt seien: Irganox der Fa. Ciba Geigy.
Außerdem können noch weitere übliche Stoffe zugesetzt werden, z.B. Füllstoffe, Pigmente.

Die erfindungsgemäßen Schmelzklebstoffe haben folgende Zusammensetzung: Das Polymerblend besteht zu 20 bis 70, vorzugsweise 35 bis 45 Gew.-% aus den weitgehend amorphen Poly-α-olefinen, zu 5 bis 40, vorzugsweise 10 bis 20 Gew. -% aus weitgehend kristallinem Poly-α-olefin und zu 5 bis 20, vorzugsweise 7 bis 15 ew.-% aus oligomerem α-0lefin. Auf 100 Gew.-Teile Polymerblends kommen 20 bis 40, vorzugsweise 25 bis 35 an Klebrigmacher, 0 bis 5, vorzugsweise 2 bis 3 an Nukleierungsmittel bzw. Wachsen und 0 bis 1, vorzugsweise 0,1 bis 0,2 an Stabilisatoren.

Die erfindungsgemäßen Mischungen werden im allgemeinen folgendermaßen hergestellt: In einem Thermo-Aluminium-Block werden bei ca. 180 bis 190 °C zunächst das Harz und dann das amorphe Poly-α-olefin aufgeschmolzen und mit einem Edelstahlrührer derart homogenisiert, daß mit einem geeigneten Stab ein völlig glatter Film des Gemisches auf eine geeignete Folie aufgetragen werden kann. Dann werden das kristalline Polyolefin sowie ein Stabilisierungsmittel zugesetzt und homogenisiert. SchlieBlich werden das Oligo-α-olefin sowie das Nukleierungsmittel zugesetzt und homogenisiert. Dann folgen noch eventuell weitere Zusätze. Es wird solange homogenisiert, bis der oben aufgeführte Test erneut einen glatten Polymerfilm ergibt.

Die erfindungsgemäßen Mischungen haben - verglichen mit den bekannten Klebstoffen ohne Oligo-α-olefin - folgende Vorteile:
1. Hohe Schlagzähigkeit,
2. niedrige Glasumwandlungstemperatur und
3. niedrige Schmelzviskosität.
Die Metalihaftung und die Wärmestandfestigkeit sind praktisch unverändert. Daraus ergeben sich folgende Vorteile bei der Verarbeitung und beim Gebrauch: Die aus der niedrigen Glasumwandlungstemperatur resultierende gute Kälteflexibilität bewirkt zusammen mit der ebenfalls hohen Wärmestandfestigkeit dieser Mischungen einen breiten Gebrauchstemperaturbereich, insbesondere in dem Tieftemperaturbereich.
Die hohe Schlagzähigkeit für derartige Mischungen mit hoher Wärmestandfestigkeit bewirkt eine wesentlich höhere Haltbarkeit von Verklebungen bei einer eventuell auftretenden schlagartigen Belastung, wie sie z.B. bei einem Stoß oder einem Fall auftreten kann. Niedrige Schmeizviskositäten bewirken eine einfachere Verarbeitung, z.B. können derartige Mischungen in kleinen Auftragsdüsen verarbeitet werden. AuBerdem bewirkt eine niedrige Viskosität eine bessere Benetzung auf dem zu verklebenden Substrat. Daraus resultiert eine bessere Adhäsion.

Aufgrund der positiven Eigenschaften der erfindungsgemäßen Mischungen eignen sich die Schmelzklebstoffe zum Verbinden von unpolaren Kunststoffen, insbesondere aus Polypropylen und Polyethylen, sowie Polypropylen zusammen mit Metallen, z.B. Al oder Cu. Konkrete Gegenstände sind: Energiekabel, Telekommunikationskabel, Elektrosteckersysteme oder Bauteile in elektrotechnischen Geräten und Montageverklebungen, z.B. im Automobilbereich wie Dach-himmel, Schaumstoff für Kopfstützen. Insbesondere eignet sich der erfindungsgemäBe Schmelzklebstoff auch zum Verkleben von PE/PP-Rohren, wie sie im Abwasser- und Energiesektor verwendet werden.

Die Erfindung wird nun im einzelnen erläutert:
Entsprechend der allgemeinen Herstellungsvorschrift werden die Zusammensetzungen gemäß den Tabellen 1 und 2 zu einem Schmelzklebstoff verarbeitet. Zur Bestimmung ihrer Eigenschaften wurden auf folgende Weise Proben hergestellt:

Vor dem Ausgießen in einen Zewaskiner aus Silikonpapier wird von dem fertigen Blend mit Hilfe eines Glasstabes eine Probe zur Präparierung eines Prüfkörpers zur Bestimmung des Erweichungspunktes abgenommen. Außerdem werden sogenannte Spottests (empirische Haftungstests) auf verschiedenen Materialien wie z.B. Polypropylen, Polyethylen, Ethylenacrylsäurecopolymeren, Aluminium und Kupfer mit dem frischen Ansatz durchgeführt.
Von dem ausgegossenen und durch Abkühlung erstarrten Material wird eine kleine Probe für die Viskositätsmessung abgeschnitten. Von dem restlichen Material wird etwa die Hälfte für die Herstellung einer Klebstoffplatte in einer beheizten Presse verwendet. Mit dieser Platte werden wieder die Prüfkörper zur Bestimmung der Wärmestandfestigkeit hergestellt. AuBerdem wird aus dieser Klebstoffplatte eine kleine Probe für die DSC-Messung herausgeschnitten. Die restliche andere Hälfte wird zu Prüfkörpern für einen Schlagbiegeversuch verarbeitet.

### Bestimmung der Wärmestandfestigkeit

Zwei 25,0 mm breite Streifen aus flexiblem Karton werden überlappend (25,0 mm Über lappungs länge) verklebt. Die Verklebung wird mit 13,5 N (0,02 N/mm²) belastet und in einem Umlufttrockenschrank einem Temperaturanstieg von 5 °/10 Min. ausgesetzt.
Als Wärmestandfestigkeit wird die Temperatur bezeichnet, bei der sich die Verklebung noch nicht löst.

### Bestimmung des Eneichungspunktes

Der Erweichungspunkt in °C wurde nach der Ring + Ball-Methode (R + B) nach ASTM E-28 gemessen.

### Bestimmung der Viskosität

Die Viskosität in mPa·s wurde unter Verwendung eines Brookfield-Thermosell-Viskosimeters Typ RVT mit der Spindel 27 bei den angegebenen Temperaturen von 180 bis 200 °C gemessen.

### Bestimmung der Schlagsprödigkeit

Die Schlagsprödigkeit wurde mit einem Schlagbiegeversuch nach Charpy in Anlehnung an DIN 53453 (Mai 1975) bestimmt.
Hierzu wurden aus den Proben Nomstäbe mit den folgenden Maßen geschnitten: Länge = 50 mm, Breite = 15 mm und Dicke (Höhe) = 10 mm. Diese Stäbe wurden mit einem Pendelschlagwerk einer schlagartigen Biegebeanspruchung gegen ein Widerlager mit einer lichten Weite von 40 mm belastet. Es wurde ein Pendelschlagwerk bis 15 J verwendet. Die Probestäbe wurden ungekerbt verwendet.

### Bestimmung der Haftung

Die Haftung wurde nur auf den verschiedenen Materialien subjektiv beurteilt. Dazu wurde ein sogenannter Spottest durchgeführt. Es handelt sich um eine, mit einem Glasstab auf das Substrat aufgetragene, Klebstoffraupe. Man versucht anschließend diese Raupe von Hand zu entfernen.

### DSC-Messungen

Die DSC-Messungen wurden unter folgenden Bedingungen durchgeführt: Aus der gepreßten Klebstoffplatte wird eine kleine Probe von ca. 10 mg in einem Al-Tiegel mit gelochtem Deckel eingewogen.
Die Probe wird in einem 1. Lauf von 0 °C mit einer Heizrate von 10 °C/min auf 200 °C aufgeheizt. Nach einer anschließenden Temperierzeit von 2 min wird die Probe nun mit einer Kühlrate von 10 °C/min auf -120 °C gekühlt. Diese Kühlphase wird im weiteren als Return bezeichnet.
Bei -120 °C wird die Probe erneut 2 min lang temperiert und anschließend in einer zweiten Heizphase (2. Lauf) mit einer Heizrate von 15 °C/min auf 300 °C aufgeheizt. Die Probe wird anschließend nicht mehr weiterverwendet. Alle thermischen Effekte, die während der drei Phasen auftraten, wurden später per Software aus den Experiment-Rohdatenfiles ausgewertet. Dabei wurden folgende Werte ermittelt. Kristaiiitschmelzwärme, Kristallitschmelzpeakmaximum, Kristallitschmelzpeakende, Kristallitkristallisationswärme, Kristallisationspeakmaximum, Glasübergangstemperatur.

Bei allen Untersuchungen, mit Ausnahme der Viskositätsmessung, wurden die entsprechenden Prüfkörper, Verklebungen oder Proben vor einer Messung mindestens 12 h bei Raumtemperatur gelagert.

**Tabelle 1**

| | Beispiele | | |
|---|---|---|---|
| | 1 | 2 | 3 |
| Dertophene T 105 | 31,0 | 31,0 | 31,0 |
| Eastoflex P 1060 | 40,0 | | |
| Vestoplast 608 | | 40,0 | |
| Eastoflex P 1824-007 | | | 40,0 |
| Vestolen P 2000 | 15,0 | 15,0 | 15,0 |
| Synfluid PA06 | 11,0 | 11,0 | 11,0 |
| Irganox 1010 | 0,2 | 0,2 | 0,2 |
| Hoechst Wachs PP 230 | 2,8 | | |
| Vestowax H 1 | | 2,8 | |
| Escomer EX 515 | | | 2,8 |
| | | | |
| Erweichungspunkt [°C] | 157,7 | 154,4 | 156,4 |
| Viskosität 180 °C | 8188 | 7875 | 4000 |
| [mPa·s] 190 °C | 6438 | 6313 | 3625 |
| 200 °C | 5188 | 5125 | 3000 |
| Wärmestandfestigkeit: [°C] | 120 | 130 | 100 |
| Schlagzähigkeit mJ/mm² : | 26,4 | 32,4 | 30,1 |
| | ohne | ohne | ohne |
| | Bruch | Bruch | Bruch |

| DSC-Messung : | | | |
|---|---|---|---|
| 1. Lauf: | | | |
| Kristallit-Schmeizwäre [J/g] | 29,2 | 34,8 | 29,8 |

| Return: | | | |
|---|---|---|---|
| Kristallisationswärme [J/g] | 23,1 | 24,7 | 24,0 |
| Kristallisations-peakmaximum [°C] | 84,7 | 84,9 | 87,5 |
| Glasübergangstemperatur [°C] | -32,0 | -32,4 | -30,5 |

| 2. Laufs | | | |
|---|---|---|---|
| Kristallitschmelzwärme [J/g] | 23,6 | 27,3 | 28,9 |
| Schmelzpeak-maximum [°C] | 148,5 | 148,3 | 150,1 |
| Glasübergangs-temperatur [°C] | -30,2 | -29,8 | -29,3 |

**Tabelle 2:**

| | Beispiele | | | |
|---|---|---|---|---|
| | 2 | 4 | Vergleiche | |
| Dertophene T 105 | 31,0 | 31,0 | 34,8 | 34,8 |
| Vestoplast 608 | 40,0 | 40,0 | 47,0 | 47,0 |
| Vestolen P 2000 | 15,0 | 15,0 | 15,0 | 15,0 |
| Irganox 1010 | 0,2 | 0,2 | 0,2 | 0,2 |
| Synfluid PA06 | 11,0 | 11,0 | | |
| Vestowax H1 | 2,8 | | 3,0 | |
| Hoechst Wachs PP 230 | | 2,8 | | 3,0 |
| | | | | |
| Erweichungspunkt [°C] | 154,7 | 154,8 | 159,8 | 157,0 |
| Viskosität 180 °C | 7875 | 8813 | 17250 | 17500 |
| [mPa·s] 190 °C | 6313 | 7063 | 13000 | 13875 |
| 200 °C | 5125 | 5625 | 10250 | 11000 |
| Wärmestandfestigkeit [°C]: | 130 | 130 | 145 | 145 |
| Schlagzähigkeit mJ/mm²: | 32,4 | 31,1 | 2,0 | 2,2 |
| | ohne | ohne | Spröd- | Spröd- |
| | Bruch | Bruch | bruch | bruch |
| | | | | |

| DSC-Messung: | | | | |
|---|---|---|---|---|
| 1. Lauf: | | | | |
| Kristallit-Schmeizwäre [J/g] | 34,2 | 30,9 | 45,3 | 40,9 |

| Return: | | | | |
|---|---|---|---|---|
| Kristallisationswärme [J/g] | 24,7 | 23,5 | 31,2 | 30,0 |
| Kristallisations-peakmaximum [°C] | 84,9 | 84,7 | 83,8 | 83,1 |
| Glasübergangstemperatur [°C] | -32,4 | -33,1 | -17,7 | -18,5 |

| 2. Lauf | | | | |
|---|---|---|---|---|
| Kristallit-schmelzwärme [J/g] | 27,3 | 23,7 | 35,3 | 33,0 |
| Schmelzpeak-maximum [°C] | 148,3 | 148,5 | 150,1 | 150,2 |
| Glasübergangs-temperatur [°C] | -29,8 | -30,5 | -15,1 | -16,8 |

### Anmerkungen zu den Tabellen

- Dertophene T 105: = Terpen-Phenol-Harz der Fa. Willers & Engel
- Eastoflex P 1060: = amorphes Poly-α-0lefin der Fa. Eastman Chemicals
- Vestoplast 608: = amorphes Poly-α-Olefincopolymer der Fa. Hüls
- Eastoflex P1824-007: = amorphes Poly-α-Olefin modifiziert mit Maleinsäureanhydrid
- Vestolen P 2000: = isotaktisches Polypropylen der Fa. Hüls
- Synfluid PA06: = Poly-α-0lefin (isoparaffinisch, hochverzweigt) der Fa. Chevron-Oronite
- Irganox 1010: = Pentaerythrittetrakis [3(3,5-di-tert-butyl-4-hydroxyphenyl )propionat] der Fa. Ciba-Geigy
- Hoechst Wachs PP230: = Polypropylenwachs der Fa. Hoechst
- Vestowax H1: = Hartparaffinwachs der Fa. Hüls
- Escomer EX 515: = Polyethylen-Copolymer-Wachs der Fa. Exxon Chemicals

Die Untersuchungen zeigen, daß sich bei hohem Festigkeits- und Wärmestandsfestigkeits-Niveau folgende Vorteile der erfindungsgemäBen Produkte ergeben:
Die Viskosität sinkt auf ca. die Hälfte. Der Widerstand gegen eine Belastung mit hoher Verformungsgeschwindigkeit wird drastisch erhöht. Der Einsatzbereich bei tiefen Temperaturen wird um mehr als 10 °C erweitert.

## Patentansprüche

1. Thermoplastischer Schmelzklebstoff auf der Basis eines Polymerblends aus Polyolefinen, gekennzeichnet durch die Komponenten
A) ein weitgehend amorphes Poly-α-olefin mit einem Kristallisationsgrad von < 30 %
B) ein weitgehend kristallines Poly-α-olefin mit einem Kristallisationsgrad von > 55 %, jeweils bestimmt mit DDK gegen einen hochkristallinen Poly-α-olefinstandard und
C) ein Oligomeres eines α-Olefins mit 8 bis 16 C-Atomen Monomeren und einem Molekulargewicht des Oligomeren bis 5 000
sowie üblichen Zusätzen.

2. Schmelzklebstoff nach Anspruch 1, gekennzeichnet durch ein Homo- oder Copolymer, insbesondere ein Terpolymeres aus den Monomerkomponenten Ethylen, Propylen und Butylen als weitgehend amorphes Poly-α-olefin mit einem Molekulargewicht von mehr als 5 000.

3. Schmelzklebstoff nach Anspruch 1 oder 2, dadurch gekennzeichnet, daß das amorphe Poly-α-olefin und/oder das weitgehend kristalline Poly-α-olefin funktionelle Gruppen enthält, z.B. aufgepfropftes Maleinsäureanhydrid.

4. Schmelzklebstoff nach Anspruch 2 oder 3, gekennzeichnet durch ein isotaktisches Polypropylen als weitgehend kristallines Poly-α-olefin mit einem Molekulargewicht von mehr als 5 000.

5. Schmelzklebstoff nach mindestens einem der Ansprüche 1 bis 4, gekennzeichnet durch ein Oligomeres eines α-Olefins mit 8 bis 16 C-Atomen im Monomeren, insbesondere durch ein Di-, Tri- oder Tetra-meres von Dec-1-en.

6. Schmelzklebstoff nach mindestens einem der Ansprüche 1 bis 5, gekennzeichnet durch die Zusammensetzung des Polymerblends, wobei das amorphe Polyolefin 35 bis 45 Gew.-% ausmacht, das kristalline Polyolefin 10 bis 20 Gew.-% und das Oligo-α-olefin 7 bis 15 Gew.-%, bezogen auf das gesamte Polymerblend.

7. Verwendung des Schmelzklebstoffes nach mindestens einem der Ansprüche 1 bis 6 zum Verkleben von unpolaren Kunststoffen, insbesondere aus Polypropylen und Polyethylen, vorzugsweise in der Automobil- und Elektroindustrie sowie im Kunststoffrohrleitungsbau.

8. Verwendung des Oligo-α-olefins nach Anspruch 1, 5 oder 6 zur Herstellung eines Polymerblends nach den Ansprüchen 1, 2, 3 oder 4.

## Claims

1. A thermoplastic hotmelt adhesive based on a polymer blend of polyolefins, characterized by the following components:
A) a substantially amorphous poly-α-olefin with a degree of crystallization of <30%,
B) a substantially crystalline poly-α-olefin with a degree of crystallization of >55%, as determined with DDK against a highly crystalline poly-α-olefin standard and
C) an oligomer of an α-olefin containing 8 to 16 carbon atoms in the monomer with a molecular weight (of the oligomer) of up to 5,000 and typical additives.

2. A hotmelt adhesive as claimed in claim 1, characterized by a homopolymer or copolymer, more particularly a terpolymer of the monomer components ethylene, propylene and butylene, as the substantially amorphous poly-α-olefin with a molecular weight of more than 5,000.

3. A hotmelt adhesive as claimed in claim 1 or 2, characterized in that the substantially amorphous poly-α-olefin and/or the substantially crystalline poly-α-olefin contain functional groups, for example grafted-on maleic anhydride.

4. A hotmelt adhesive as claimed in claim 2 or 3, characterized by an isotactic polypropylene as the substantially crystalline poly-α-olefin with a molecular weight of more than 5,000.

5. A hotmelt adhesive as claimed in at least one of claims 1 to 4, characterized by an oligomer of an α-olefin containing 8 to 16 carbon atoms in the dimer, more particularly by a dimer, trimer or tetramer of dec-1-ene.

6. A hotmelt adhesive as claimed in at least one of claims 1 to 5, characterized by the composition of the polymer blend, the amorphous polyolefin making up 35 to 45% by weight, the crystalline polyolefin making up 10 to 20% by weight and the oligo-α-olefin making up 7 to 15% by weight, based on the polymer blend as a whole.

7. The use of the hotmelt adhesive claimed in at least one of claims 1 to 6 for bonding apolar plastics, more particularly of polypropylene and polyethylene, preferably in the automotive and electrical industries and in the construction of plastic pipelines.

8. The use of the oligo-α-olefin according to claim 1, 5 or 6 for the production of the polymer blend according to claim 1, 2, 3 or 4.

## Revendications

1. Colle à fusion thermoplastique à base d'un mélange de polymères, constitué de polyoléfines, caractérisé par les composants
A) une poly-α-oléfine largement amorphe possédant un degré de cristallisation de < 30 %
B) une poly-α-oléfine largement cristalline présentant un degré de cristallisation de > 55 %, déterminé dans chaque cas par CDD (calorimétrie différentielle dynamique) par rapport à un standard de poly-α-oléfine de haute cristallinité et
C) un oligomère d'une α-oléfine comportant 8 à 16 atomes de carbone dans le monomère et avec un poids moléculaire de l'oligomère allant jusqu'à 5000, ainsi que les additifs usuels.

2. Colle à fusion selon la revendication 1, caractérisée par un homo- ou par un copolymère, en particulier un terpolymère constitué des composants monomères éthylène, propylène et butylène, comme poly-α-oléfine largement amorphe et possédant un poids moléculaire supérieur à 5000.

3. Colle à fusion selon la revendication 1 ou 2, caractérisée en ce que la poly-α-oléfine amorphe et/ou la poly-α-oléfine largement cristalline comporte(nt) des groupes fonctionnels, par exemple de l'anhydride maléique greffé.

4. Colle à fusion selon la revendication 2 ou 3, caractérisée par un polypropylène isotactique comme poly-α-oléfine largement cristalline possédant un poids moléculaire supérieur a 5000.

5. Colle à fusion selon au moins une des revendications la 4, caractérisée par un oligomère d'une α-oléfine comportant 8 à 16 atomes de carbone dans le monomère, en particulier par un di-, un tri- ou un tétramère de dec-1-ène.

6. Colle à fusion selon au moins une des revendications 1 à 5, caractérisée par la composition du mélange de polymères, dans laquelle la polyoléfine amorphe représente 35 à 45 % en poids, la polyoléfine cristalline représente 10 à 20 % en poids et l'oligo-α-oléfine représente 7 à 15 % en poids, par rapport à la totalité du mélange de polymères.

7. Utilisation de la colle à fusion selon au moins une des revendications 1 à 6, pour le collage de matières plastiques non polaires, en particulier en polypropylène et en polyéthylène, de préférence dans l'industrie automobile et électrique, ainsi que dans la construction de canalisations en matières plastiques.

8. Utilisation de l'oligo-α-oléfine selon la revendication 1, 5 ou 6 pour la préparation d'un mélange de polymères selon la revendication 1, 2, 3 ou 4.
